# EUROPÄISCHE PATENTSCHRIFT

(11) **EP 3 823 852 B1**
(45) Veröffentlichungstag und Bekanntmachung des Hinweises auf die Patenterteilung: **03.11.2021**
(21) Anmeldenummer: 20800545.4
(22) Anmeldetag: 29.09.2020
(51) Int. Cl.: B60J 10/70

(54) **LEISTENANORDNUNG UND VERFAHREN ZUR HERSTELLUNG**
STRIP ASSEMBLY AND PRODUCTION METHOD
ENSEMBLE BANDE ET PROCÉDÉ DE PRODUCTION

(30) Priorität: 10.10.2019 DE 102019127378
(43) Veröffentlichungstag der Anmeldung: 26.05.2021
(73) Patentinhaber: Elkamet Kunststofftechnik GmbH, 35216 Biedenkopf (DE)
(72) Erfinder: BERGMANN, Lutz, 35630 Ehringshausen (DE); HAIN, Christoph, 35232 Dautphetal (DE); HAIN, Marco, 35713 Eschenburg (DE); LANDECK, David, 35037 Marburg (DE); ORTMÜLLER, Michael, 35232 Dautphetal-Herzhausen (DE); PELICHET, Timothee, 35641 Schöffengrund (DE); ROTH, Hartmut, 35216 Biedenkopf (DE); SCHNEIDER, Marcus, 35232 Dautphetal (DE); SCHNEIDER, Timo, 35713 Eschenburg (DE)
(86) Internationale Anmeldenummer: PCT/DE2020/100831
(87) Internationale Veröffentlichungsnummer: WO 2021/069019

(56) Entgegenhaltungen:
- EP-A1- 1 803 610
- WO-A1-2018/171972
- FR-A1- 2 869 257

## Beschreibung

### Technisches Gebiet

Die vorliegende Erfindung betrifft eine Leistenanordnung und ein Verfahren zur Herstellung.

### Stand der Technik

Kunststoffprofilleisten zur Anbringung einer Fahrzeug-Wasserkastenabdeckung an einer Fahrzeug-Windschutzscheibe sind bekannt. Hierbei ist von der Kunststoffprofilleiste eine Rastausnehmung zur Aufnahme einer Befestigungsrippe der Wasserkastenabdeckung umfasst, wobei die Rastausnehmung zur kraft- und/oder formschlüssigen Aufnahme der Befestigungsrippe ausgebildet ist.

Während der Herstellung der Kunststoffprofilleiste und während der Montage der Kunststoffprofilleiste an der Windschutzscheibe kann diese sehr starken mechanischen Belastungen ausgesetzt sein. Hierbei kann es sich beispielsweise um Biegevorgänge zur Adaptierung der Kunststoffprofilleiste an verschiedenste Windschutzscheibenkonturen handeln. Auch beim Anpressen der Kunststoffprofilleiste an den Windschutzscheibenrand können sehr hohe Kräfte entlang der Kunststoffprofilleiste auftreten, insbesondere auch entlang der Rastausnehmung. Daher kann eine einstückige Kunststoffschutzleiste vorgesehen sein, welche mit der Rastausnehmung mechanisch lösbar verrastbar ist und welche nach der Verrastung dem Schutz der Rastausnehmung dient.

Hinzu kommt, dass die Kunststoffprofilleiste häufig schon vor dem Einbau der Windschutzscheibe, insbesondere bereits beim Windschutzscheibenhersteller, mit der Windschutzscheibe verbunden wird. Solche vorkonfektionierten Windschutzscheiben werden wegen ihrer Sprödigkeit in der Regel aufrecht transportiert. Die Kunststoffprofilleiste kann dabei als Auflagekante dienen. Aufgrund des Gewichtes der Fahrzeugscheibe kann sich die Kunststoffprofilleiste und mithin deren Rastausnehmung verformen, so dass später beim Einrasten der Wasserkastenabdeckung Probleme und/ oder Undichtigkeiten auftreten. Auch hierbei spielt die Kunststoffschutzleiste eine wichtige Rolle zum Schutze der Kunststoffprofilleiste und/oder der Rastausnehmung.

Insgesamt kann mit Hilfe der Kunststoffschutzleiste die Geometrie des Querschnitts der Kunststoffprofilleiste und/oder der Rastausnehmung auch bei widrigsten äußeren Umständen geschützt werden, so dass die Wasserkastenabdeckung stets zuverlässig, präzise und dicht in die Rastausnehmung der Kunststoffprofilleiste eingerastet werden kann. Vor dem Einrasten der Wasserkastenabdeckung in die Rastausnehmung muss jedoch die Kunststoffschutzleiste aus der Rastausnehmung entfernt werden. Problematisch hierbei ist, dass sich die Kunststoffschutzleiste aufgrund der mechanisch sehr stabilen Verrastung nicht ergonomisch und nur mühsam aus der Rastausnehmung der Kunststoffprofilleiste entfernen lässt. Der Arbeitsschritt zur Entfernung der Kunststoffschutzleiste dauert daher unterschiedlich lange und ist für die Handmuskulatur eines Werkers auf Dauer sehr ermüdend. Die Taktung an der Fertigungsstraße muss auf die ungünstige Zeitdauer ("worst case") eingestellt werden, was insgesamt die Effizienz des Montagevorgangs beeinträchtigt. Außerdem kommt es bei der Entfernung der Kunststoffschutzleiste regelmäßig zu Beschädigungen der Kunststoffprofilleiste und umliegender Fahrzeugbauteile bzw. von Fahrzeugoberflächen (z.B. der Fahrzeuglackierung), zum Beispiel durch den Einsatz ungeeigneter Hilfsmittel wie Schraubendreher, Zangen oder dergleichen. Schließlich besteht ein Verletzungsrisiko für die ausführende Person, beispielsweise durch Abbrechen eines Fingernagels, wenn versucht wird, die Kunststoffschutzleiste mittels eines Fingernagels aus der Rastausnehmung heraus zu hebeln.

Um dem zu begegnen, sieht die Offenlegung EP 2 253 556 A1 vor, eine Kunststoffschutzleiste mit einer Grifflasche bereitzustellen, welche sich quer und abschnittsweise entlang der Kunststoffschutzleiste erstreckt, während diese mit der Rastausnehmung der Kunststoffprofilleiste verrastet ist. Derartige Konstruktionen können leicht reißen, und es besteht das Risiko, dass man beim Anpacken der Grifflasche abrutscht, insbesondere beim Tragen von Handschuhen oder bei sonstigen widrigen Umgebungsbedingungen, wie im Fahrzeugbau üblich, z.B. durch ölige oder verschmutzte Hände. Ein ähnlicher Ansatz wird in der Offenlegung WO2014/041279A1 verfolgt. Insbesondere wenn es sich um eine drahtförmige Griffschlaufe zum Herausziehen der verrasteten Kunststoffschutzleiste handelt, birgt dies eine hohe Verletzungsgefahr in sich, denn je nach erforderlichem Kraftaufwand kann die drahtförmige Konstruktion die Haut des Werkers aufschneiden. Beide Lösungen erfordern außerdem zusätzlichen hohen Aufwand bei der Herstellung der Leistenanordnung und können beim Handling (z.B. Transport, Montage, Lagerung, etc.) der Leistenanordnung dazu führen, dass sich die gesamte Leistenanordnung an einem anderen Bauteil verfängt, so dass die Kunststoffschutzleiste unbeabsichtigt und vorzeitig aus der Rastausnehmung herausgelöst wird oder gar die gesamte Anordnung und/oder umliegende Bauteile verformt oder beschädigt werden. Offenlegung WO 2018/171972 A1 offenbart eine überstehende Kunststoffschutzleiste.

Es ist daher eine alternative Leistenanordnung wünschenswert, welche die geschilderten Nachteile des Standes der Technik überwindet, und mittels derer die Kunststoffschutzleiste werkzeugfrei aus der Rastausnehmung herauslösbar ist, wobei die Leistenanordnung zusätzlich möglichst preiswert herstellbar sein soll.

### Kurzbeschreibung der Erfindung

Erfindungsgemäß wird eine Leistenanordnung gemäß Anspruch 1 sowie ein Verfahren zur Herstellung einer Leistenanordnung gemäß Anspruch 8 vorgeschlagen. Zusätzlich wird eine Windschutzscheibe mit einer erfindungsgemäßen Leistenanordnung empfohlen und ein Fahrzeug mit einer solchen Windschutzscheibe bereitgestellt.

Zur Realisierung der erfindungsgemäßen Leistenanordnung wird eine einstückige Kunststoffprofilleiste vorgesehen, welche bevorzugt aus einem extrudierten ersten Kunststoffstrang (Profilleistenstrang, Strangabschnitt) realisiert wurde. Die Kunststoffprofilleiste umfasst eine Rastausnehmung, welche sich entlang der Kunststoffprofilleiste erstreckt. Weiter wird zur Realisierung der Leistenanordnung eine einstückige Kunststoffschutzleiste vorgesehen, welche bevorzugt aus einem extrudierten zweiten Kunststoffstrang (Schutzleistenstrang, Strangabschnitt) realisiert wurde. Die Querschnitte der Kunststoffprofilleiste und der Rastausnehmung sind bevorzugt korrespondierend zueinander ausgeführt, so dass eine reibschlüssig und/oder formschlüssig lösbare Verrastung realisierbar ist.

Eine Wasserkastenabdeckung mit einer Befestigungsrippe, welche einen zur Rastausnehmung der Kunststoffprofilleiste im Wesentlichen korrespondierenden Querschnitt aufweist, lässt sich bevorzugt mit geringerem Kraftaufwand in der Rastausnehmung montieren als demontieren. Dies kann beispielsweise mittels sich entlang der Rastausnehmung erstreckender und vorzugsweise mittels Koextrusion (d.h. dem Zusammenführen von artgleichen oder unterschiedlichen Kunststoffschmelzen vor dem Verlassen der Profildüse des Extruders) hergestellter, flexibler und/oder vorstehender Kunststofflippen und/oder Rastnasen innerhalb der Rastausnehmung erreicht werden, deren Shorehärte im Vergleich zur Shorehärte der Rastausnehmung vorzugsweise geringer sein kann.

Erfindungsgemäß wird ein erster und ein zweiter Leistenabschnitt vorgesehen, wobei die Kunststoffprofilleiste derart ausgebildet ist, so dass sich diese ausschließlich innerhalb des ersten Leistenabschnittes erstreckt und wobei die Kunststoffschutzleiste derart ausgebildet ist, so dass sich diese, vorzugsweise ausschließlich, innerhalb beider Leistenabschnitte erstreckt und entlang der, vorzugsweise gesamten, Länge der Kunststoffprofilleiste, zumindest abschnittsweise, mit der Rastausnehmung verrastet ist.

Beide Leistenabschnitte können unmittelbar aneinandergrenzend ausgeführt sein, so dass mit dem Ende des ersten Leistenabschnittes unmittelbar der zweite Leistenabschnitt beginnt und/oder dass das Ende des ersten Leistenabschnittes mit dem Anfang des zweiten Leistenabschnittes zusammenfällt. Der zweite Leistenabschnitt kann sich dabei als Fortsetzung der Längsrichtung des ersten Leistenabschnittes im Raum erstrecken oder sich in einem Winkel quer zur Längsrichtung des ersten Leistenabschnittes im Raum erstrecken.

Die Kunststoffschutzleistenlänge kann, bezogen auf die Kunststoffprofilleistenlänge, länger als die Kunststoffprofilleistenlänge realisiert sein, so dass die daraus resultierende Überlänge der Kunststoffschutzleiste außerhalb der technischen Toleranzgrenzen des Herstellungsverfahrens liegt und/oder einem Bruchteil der Kunststoffprofilleistenlänge entspricht. Die Überlänge der Kunststoffschutzleiste kann zumindest derart dimensioniert sein, dass diese für einen Werker manuell ergreifbar ist. Die Überlänge kann in etwa der Fingerdicke einer durchschnittlichen erwachsenen Person entsprechen, so dass die Kunststoffschutzleiste beispielsweise zwischen Zeigefinger und Daumen der Person einklemmbar und somit greifbar ist. Die Kunststoffschutzleistenoberfläche kann derart gestaltet sein, dass der Werker beim Greifen der Überlänge nicht abrutscht, beispielsweise mittels einer sich entlang der Kunststoffschutzleiste erstreckenden Oberflächenaufrauhung und/oder mittels einer Gummierung.

Aufgrund der beim Greifen vorherrschenden Hebelwirkung können die erforderlichen Kräfte zum manuellen Herauslösen der Kunststoffschutzleiste aus der Rastausnehmung leicht überwunden werden. Außerdem lässt sich die Leistenanordnung ohne zusätzliche Bauteile und/oder Montageschritte aus, vorzugsweise extrudierten, Endlossträngen herstellen.

Vorteilhafte Ausgestaltungen sind Gegenstand der Unteransprüche sowie der nachfolgenden Beschreibung.

### Vorteile der Erfindung

Die Erfindung ermöglicht es einerseits, dass bei verrasteter Kunststoffschutzleiste die Innenwandungen der Rastausnehmung und/oder die gegenüberliegenden Kanten der Rastausnehmung gegeneinander abgestützt sind. Somit wird bei einer äußeren Krafteinwirkung auf die Leistenanordnung entlang der Rastausnehmung einer Verformung des Querschnittes der Rastausnehmung vorgebeugt. Die Leistenanordnung kann somit schon während oder unmittelbar nach ihrer Herstellung bearbeitet (z.B. Verformen) oder verarbeitet (z.B. Andrücken an eine Windschutzscheibenkante) oder transportiert (z.B. vormontiert an der Kante einer Windschutzscheibe) werden.

Die Erfindung ermöglich es zusätzlich, dass die Kunststoffschutzleiste vor der Endmontage des Wasserkastens in der Rastausnehmung, und zwar mit minimalstem Zeitaufwand, händisch oder (teil-)automatisiert entfernt werden kann. Somit ist die Rastausnehmung in jeder denkbaren räumlichen Lage oder Anordnung bis zur Endmontage am Fahrzeug optimal geschützt. Die Herausnahme der Kunststoffschutzleiste erfolgt bevorzugt händisch und völlig werkzeugfrei, indem ein Werker die Kunststoffschutzleiste im Bereich des zweiten Leistenabschnitts beispielsweise mittels Zeigefinger und Daumen greift und aus der Rastausnehmung abzieht. Dies verbessert insgesamt die Ergonomie und verringert die körperliche Belastung des Werkers, weil dies für die Handmuskulatur weniger ermüdend ist. Das Verletzungsrisiko für den Werker geht gegen Null, weil er nicht mehr dazu verleitet wird, z.B. die Kunststoffschutzleiste mittels eines Fingernagels zu entfernen, und auch sonst kein scharfkantiges Werkzeug mehr einzusetzen braucht. Auf in die Leistenanordnung zwischen Kunststoffschutzleiste und Rastausnehmung während der Herstellung eingefädelte Hilfsgriffmittel, wie Drahtschlaufen oder sonstige Schlaufen, kann gänzlich verzichtet werden.

Montagebedingte Schäden an Karosserie und/oder Rastausnehmung werden somit zusätzlich bestmöglich vermieden. Insgesamt reduziert dies die Montagekosten und beugt etwaigen Reklamationen vor. In der Massenproduktion von Leistenanordnungen und Fahrzeugen können damit erhebliche Kosten eingespart werden, denn die Dauer des Arbeitsschrittes "Herausziehen der Kunststoffschutzleiste" wird nun besser kalkulierbar. Die Taktung an der Fertigungsstraße kann entsprechend voreingestellt werden. Tatsächlich wird der Zeitaufwand für das Entfernen der Kunststoffschutzleiste aus der Rastausnehmung nunmehr vernachlässigbar. Für ein teil- oder vollautomatisiertes Entfernen der Kunststoffschutzleiste steht nun ein Griffmittel bereit, welches leicht, beispielsweise mittels eines Roboters, ergreifbar ist.

Zweckmäßigerweise ist eine zweite Kunststoffprofilleiste mit einer Rastausnehmung derart vorgesehen, dass sich diese ausschließlich innerhalb des zweiten Leistenabschnittes erstreckt, wobei die Kunststoffschutzleiste zusätzlich mit der Rastausnehmung dieser zweiten Kunststoffprofilleiste zumindest abschnittsweise verrastet ist. Hierdurch vergrößert sich die Grifffläche der überstehenden Kunststoffschutzleiste und verbessert sich die Griffigkeit beim Herauslösen der Kunststoffschutzleiste aus der Rastausnehmung der ersten Kunststoffprofilleiste.

Besonders zweckmäßig ist es, wenn die Kunststoffprofilleiste eine Anlagefläche zum Anlegen entlang einer Windschutzscheibenkante umfasst. Weiter bevorzugt ist ein doppelseitiges Klebeband vorgesehen, umfassend eine erste Klebefläche und eine mittels einer, vorzugsweise einstückigen, Klebebandschutzfolie bedeckte zweite Klebefläche. Das Klebeband ist zweckmäßigerweise mittels der ersten Klebefläche auf der Anlagefläche aufgeklebt und die Klebebandschutzfolie erstreckt sich bevorzugt innerhalb beider Leistenabschnitte.

Die Klebebandschutzfolienlänge kann länger als die Kunststoffprofilleistenlänge realisiert sein, so dass die daraus resultierende Überlänge der Klebebandschutzfolie außerhalb der technischen Toleranzgrenzen des Herstellungsverfahrens liegt und/oder einem Bruchteil der Kunststoffprofilleistenlänge entspricht. Die daraus resultierende Überlänge der Klebebandschutzfolie ist zumindest derart dimensioniert, dass diese für einen Werker manuell ergreifbar ist. Die Überlänge kann in etwa der Fingerdicke einer durchschnittlichen erwachsenen Person entsprechen, so dass die Klebebandschutzfolie beispielsweise zwischen Zeigefinger und Daumen der Person einklemmbar und somit greifbar ist. Vorzugsweise ist die Überlänge im Rahmen der üblichen fertigungsbedingten Toleranzgrenzen im Wesentlichen identisch zur Überlänge der Kunststoffschutzleiste. Die Klebebandschutzfolienoberfläche kann derart gestaltet sein, dass der Werker beim Greifen der Überlänge nicht abrutscht, beispielsweise mittels einer Oberflächenaufrauhung und/oder mittels einer Gummierung.

Die Anlagefläche kann den Montagevorgang vereinfachen, zum Beispiel während die Kunststoffprofilleiste an die Windschutzscheibenkante angeformt und/oder an dieser angeordnet wird. Die Anlagefläche dient bevorzugt beim Anformen der Kunststoffprofilleiste an die Windschutzscheibenkante als Führung, solange die Klebebandschutzfolie sich auf der zweiten Klebefläche befindet. Sobald die Kunststoffprofilleiste die gewünschte Form angenommen hat, kann die Klebebandschutzfolie genauso einfach und effizient und mit denselben Vorteilen von der Anlagefläche entfernt werden, wie die Kunststoffschutzleiste aus der Rastausnehmung entfernt werden kann. Es wird sogar möglich, die Kunststoffschutzleiste gleichzeitig zusammen mit der Klebebandschutzfolie, d.h. innerhalb eines Arbeitsganges, von der Kunststoffprofilleiste zu entfernen. Bevorzugt wird jedoch zuerst die Klebebandschutzfolie entfernt, anschließend die Kunststoffprofilleiste am Scheibenrand appliziert und dann erst die Kunststoffschutzleiste aus der Rastausnehmung entfernt.

Vorteilhafterweise weist ein Ende der Kunststoffprofilleiste im Wesentlichen quer zur Längserstreckung der Kunststoffprofilleiste Merkmale einer Sollbruchstelle oder einer gestanzten Schnittstelle auf. Mittels einer Stanzung lässt sich die Kunststoffprofilleiste leicht innerhalb der vorgegebenen Leistenabschnitte anordnen und preiswert realisieren, da der Stanzvorgang in den Herstellprozess leicht integrierbar ist. Mittels einer Sollbruchstelle kann die Leistenanordnung später, z.B. während des Montageprozesses am Fahrzeug, realisiert werden. Im letzteren Fall ist neben der Rastausnehmung somit auch die Kunststoffschutzleiste vor Beschädigungen geschützt, weil sie von beiden Rastausnehmungen beider mittels der Sollbruchstelle verbundener Kunststoffprofilleisten zunächst weiterhin zumindest teilweise umfasst und geführt ist.

Weiter bevorzugt umfasst die Kunststoffprofilleiste einen sich entlang der Kunststoffprofilleiste erstreckenden und zumindest abschnittsweise plastisch verformbaren Profilleistenkern, wobei die Kunststoffprofilleiste zumindest abschnittsweise bogenförmig ausgebildet ist, idealerweise korrespondierend zur Windschutzscheibenkante vorgebogen ist, vorzugsweise mittels einer geraden und/oder schiefen Biegung. Vorzugsweise ist auch eine Rückfederungskompensation vorgesehen. Damit lässt sich die Kunststoffprofilleiste leichter an die zu applizierende Kante anpassen, anheften und montieren. Der Montagevorgang wird beschleunigt. Der Profilleistenkern kann einteilig oder mehrteilig realisiert sein, außerdem kann er mittels eines Metalls oder mittels eines Kunststoffes realisiert sein. Dieser Kunststoff kann vom Kunststoffmaterial der den Kern umfassenden Profilleiste abweichen bezüglich der Shorehärte und/oder bezüglich des verwendeten Materials. Der Profilleistenkern und der umliegende Profilleistenkunststoff können im Rahmen eines Koextrusionsverfahrens realisiert sein.

Eine Windschutzscheibe mit einer, vorzugsweise an der Windschutzscheibe vormontierten, erfindungsgemäßen Leistenanordnung ist sehr gut geeignet für das Ersatzteilgeschäft, insbesondere für Anbieter, welche sich auf den Austausch von Windschutzscheiben spezialisiert haben. Solche Anbieter werden mit Windschutzscheiben unterschiedlichster Hersteller beliefert und gelegentlich müssen diese Windschutzscheiben auch zwischengelagert werden. Die vormontierte Leistenanordnung schützt in diesem Falle einerseits die Längsseite der Windschutzscheibe während der Lagerung bzw. während eines Transports und/oder während der Montage. Die noch verrastete Kunststoffschutzleiste schützt andererseits die Rastausnehmung der Kunststoffprofilleiste vor Quetschungen aufgrund des Eigengewichtes der Windschutzscheibe, welches auf die Leistenanordnung während der Lagerung einwirkt.

Nachdem die Windschutzscheibe am Fahrzeug fest angeordnet wurde, wird die überstehende Kunststoffschutzleiste vom Monteur als Griffmittel verwendet, um die gesamte Kunststoffschutzleiste aus der Rastausnehmung zu entfernen. Anschließend kann die Befestigungsrippe der Wasserkastenabdeckung mit der Rastausnehmung vom Monteur verrastet werden. Dies geht aufgrund des weiter oben erwähnten Designs der Rastausnehmung besonders montagefreundlich und einfach mit wenig Kraftaufwand vonstatten.

Das erfindungsgemäße Verfahren ermöglicht eine besonders kostengünstige und effiziente Herstellung der erfindungsgemäßen Leistenanordnung aus einstückigen Strängen, welche mittels, vorzugsweise extrudierter und/oder mittels eines 3D-Druckerfahrens gedruckter, Kunststoffe realisiert werden, und welche bereits im Herstellprozess miteinander verbunden werden z.B. mittels einer Verrastung. Die Reihenfolge der Verfahrensschritte ist nicht durch die Reihenfolge der nachfolgenden Beschreibung oder der Ansprüche festgelegt und kann im Rahmen der beanspruchten Lehre variiert werden.

Das erfindungsgemäße Verfahren zur Herstellung einer erfindungsgemäßen Leistenanordnung umfasst zumindest die nachfolgend aufgeführten Verfahrensschritte:
- Bereitstellung eines Profilleistenstrangs mit einer Rastausnehmung zur Aufnahme einer Befestigungsrippe einer Wasserkastenabdeckung sowie eines Schutzleistenstrangs, welcher zumindest abschnittweise mit der Rastausnehmung mechanisch lösbar verrastet ist, und
- Zweiteilung des Profilleistenstrangs in einem Bearbeitungsbereich, wobei der Schutzleistenstrang einstückig bleibt.

In einer Weiterbildung des Verfahrens wird vor oder nach der Zweiteilung des Profilleistenstrangs ein Strangabschnitt von dem Profilleistenstrang und dem Schutzleistenstrang abgetrennt, welcher den Bearbeitungsbereich umfasst. Der Strangabschnitt ist bevorzugt aus den Endabschnitten des Profilleistenstrangs und des Schutzleistenstrangs gebildet oder umfasst diese. Der Strangabschnitt liegt der Leistenanordnung zugrunde.

In dem hier in Bezug auf das Verfahren beschriebenen Bearbeitungsbereich erzeugt die Zweiteilung eine Grenze oder einen Übergangsbereich zwischen den beiden unter Bezug auf die erfindungsgemäße Leistenanordnung beschriebenen Leistenabschnitten.

Die Zweiteilung kann vor oder nach der Gewinnung eines Strangabschnittes erfolgen, was die Flexibilität erhöht und ein anwendungsspezifisches Reagieren auf Kundenwünsche ermöglicht. Die Zweiteilung kann mittels einer Sollbruchstelle realisiert werden, um das Material anschließend oder verzögert aufzutrennen. Die Auftrennung wäre in diesem Falle erst nach der Herstellung und vor oder während bzw. nach der Montage möglich. Alternativ oder zusätzlich kann die Zweiteilung mittels Stanzen oder Schneiden erfolgen, was sich leicht und vorzugsweise automatisiert in den Herstellprozess integrieren lässt. Hierdurch wird eine Materialdurchtrennung bewirkt, durch welche ein endständiger Teilabschnitt von dem Profilleistenstrang abgetrennt wird, welcher optional von dem Profilleistenstrang und dem Schutzleistenstrang entfernt werden kann. Der hier in Bezug auf das Verfahren beschriebene endständige Teilabschnitt entspricht der in Bezug auf die erfindungsgemäße Leistenanordnung beschriebenen zweiten Kunststoffprofilleiste oder bildet diese.

Bevorzugt wird zur Stanzung ein Profilmesser verwendet, welches derart ausgebildet ist, dass es den Schutzleistenstrang bzw. die aus dem Schutzleistenstrang resultierende Kunststoffschutzleiste zumindest abschnittsweise ausspart, so dass diese einstückig verbleibt bzw. zumindest nicht vollständig durchtrennt wird. Das Profilmesser ist bevorzugt korrespondierend zum Querschnitt des Profilleistenstrangs bzw. Strangabschnitts bzw. der Kunststoffprofilleiste ausgebildet und umfasst bevorzugt eine Aussparung für den Querschnitt des Schutzleistenstrangs bzw. der Kunststoffschutzleiste. Im Übrigen entsprechen die Vorteile des erfindungsgemäßen Verfahrens den weiter oben erläuterten Vorteilen im Hinblick auf die erfindungsgemäße Leistenanordnung und den in diesem Zusammenhang erwähnten Ausführungsformen und Varianten. Auf diese vorstehende Beschreibung wird daher auch im Hinblick auf das erfindungsgemäße Verfahren verwiesen. Weitere Vorteile und Ausgestaltungen der Erfindung ergeben sich aus der nachfolgenden Figurenbeschreibung und den zugrundeliegenden Zeichnungen.

Es versteht sich, dass die vorstehend genannten und bereits erwähnten Merkmale und die nachfolgend noch zu erläuternden Merkmale in den Zeichnungen nicht nur in der jeweils angegebenen Merkmalskombination, sondern auch in anderen, hier nicht explizit genannten Merkmalskombinationen oder in Alleinstellung oder isoliert auftreten können, ohne den Rahmen der vorliegenden Erfindung zu verlassen. Dies gilt insbesondere für alle lediglich der Vollständigkeit halber in den verschiedenen Ausführungsformen gezeigten und/oder beschriebenen Merkmale, welche jedoch nicht erfindungswesentlich sind, d.h. nicht zur Erzielung der erfindungsgemäßen Effekte zwingend erforderlich sind.

Die Erfindung wird anschließend anhand der nachfolgenden Ausführungsbeispiele in den Zeichnungen grob schematisch dargestellt und unter Bezugnahme auf die Zeichnungen kurz beschrieben. Identische oder gleichwirkende Merkmale sind mit denselben Bezugszeichen versehen, sofern nichts weiter dazu angegeben ist.

### Kurze Beschreibung der Zeichnungen

Figur 1 zeigt extrudierte oder mittels 3D-Druck hergestellte Kunststoffstränge.
Figur 2 zeigt eine erfindungsgemäß bearbeitete erste Leistenanordnung.
Figur 3 zeigt ein Endstück der bearbeiteten Leistenanordnung aus Figur 2.
Figur 4 zeigt eine erfindungsgemäß bearbeitete zweite Leistenanordnung.
Figur 5 zeigt den Querschnitt der erfindungsgemäßen Leistenanordnung.
Figur 6 zeigt eine Windschutzscheibe mit erfindungsgemäßer Leistenanordnung.
Figur 7 zeigt zu Figur 5 eine alternative Ausführungsform für den Querschnitt.

### Detaillierte Beschreibung der Zeichnungen

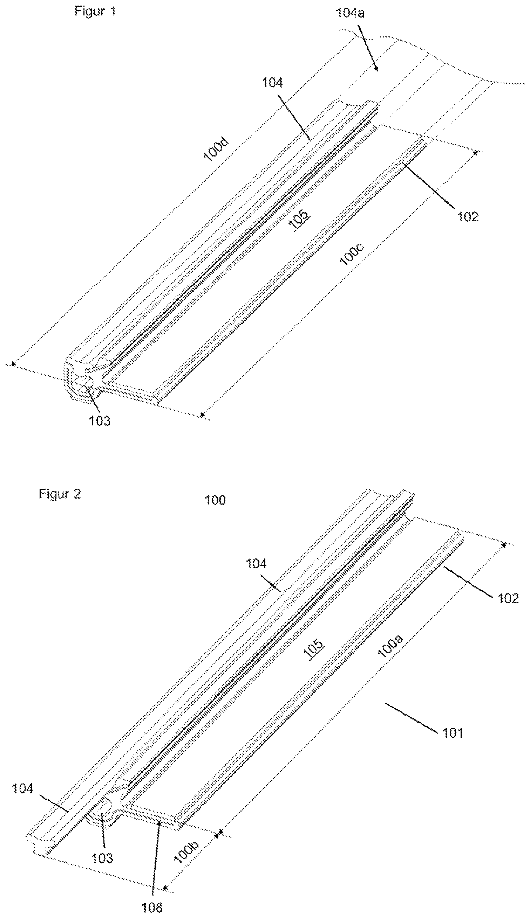

Figur 1 zeigt einen einstückigen, extrudierten und/oder mittels eines 3D-Druckverfahrens hergestellten, Profilleistenstrang 100d aus zumindest einem Kunststoff. Vom Profilleistenstrang 100d umfasst ist eine, vorzugsweise durchgehend verlaufende, Anlagefläche 102 und Rastausnehmung 103. In die Rastausnehmung 103 ist ein korrespondierend zur Rastausnehmung 103 ausgebildeter Schutzleistenstrang 104a form- und/oder kraftschlüssig eingebracht. Der Schutzleistenstrang 104a ist ebenfalls aus einem Kunststoff einstückig hergestellt, vorzugsweise mittels Extrusion und/oder 3D-Druck. Auf der Anlagefläche 102 ist ein doppelseitiges Klebeband (nicht sichtbar) aufgeklebt. Die nicht mit der Anlagefläche 102 verklebte zweite Klebeseite des doppelseitigen Klebebandes ist mit einer Klebebandschutzfolie 105 abgedeckt. Die Endabschnitte des Profilleistenstrangs 100d und des Schutzleistenstrangs 104a bilden einen Strangabschnitt 100c, welcher der Leistenanordnung 100 zugrunde liegt. Der Strangabschnitt kann mittels eines Stanz- und/oder eines Schneidevorgangs von dem Profilleistenstrang 100d und dem Schutzleistenstrang 104a abgetrennt werden.

Generell kommen als Kunststoffe Thermoplaste und/oder Duroplaste mit und/oder ohne Füllstoffe und/oder in unterschiedlichsten Shorehärten in Frage. Geeignete Materialien sind PE (Polyethylen), PP (Polypropylen), PA6 (Polyamid 6), PA12 (Polyamid 12), PA6.6 (Polyamid 6.6), ABS (Acrylnitril-Butadien-Styrol), PVC (Polyvinylchlorid), PVC/ABS, SAN (Styrol/Acrylnitril), PC (Polycarbonat), PMMA (Polymethylmethacrylat), et cetera.

Figur 2 zeigt den aus Figur 1 bekannten Strangabschnitt 100c, welcher erfindungsgemäß behandelt wurde, so dass eine Leistenanordnung 100 mit einem ersten und mit einem zweiten Leistenabschnitt 100a, 100b entsteht. Die Kunststoffprofilleiste 101 mit der von ihr umfassten Rastausnehmung 103 und der Anlagefläche 102 (größtenteils verdeckt von dem doppelseitigen Klebeband 106 mit Klebebandschutzfolie 105) erstreckt sich bei dieser Ausführungsform ausschließlich und im Rahmen der üblichen Herstellungstoleranzen innerhalb des ersten Leistenabschnittes 100a. Die Kunststoffschutzleiste 104 erstreckt sich bei dieser Ausführungsform ausschließlich und im Rahmen der üblichen Herstellungstoleranzen innerhalb beider Leistenabschnitte 100a, 100b und entlang, vorzugsweise der gesamten Länge, der Kunststoffprofilleiste 101, und ist zumindest abschnittsweise mit der Rastausnehmung 103 formschlüssig und lösbar verrastet.

In der hier gezeigten bevorzugten Ausführungsform erstreckt sich die Kunststoffprofilleiste 101 einstückig und durchgehend vom Beginn bis zum Ende des ersten Leistenabschnittes 100a und die Kunststoffschutzleiste 104 erstreckt sich einstückig und durchgehend vom Beginn des ersten Leistenabschnittes 100a bis zum Ende des zweiten Leistenabschnittes 100b. Die Kunststoffschutzleiste 104 überbrückt somit einstückig und durchgehend die Grenze zwischen beiden Leistenabschnitten 100a und 100b. Die Kunststoffschutzleiste 104 verläuft im Bereich des zweiten Leistenabschnittes 100b zumindest abschnittsweise frei und/oder ohne die Führung einer Rastausnehmung. Die Kunststoffschutzleiste 104 ist daher im zweiten Leistenabschnitt 100b zumindest abschnittsweise nicht von dem Kunststoffmaterial einer Rastausnehmung und/oder einer Kunststoffprofilleiste umgeben. Die Kunststoffschutzleiste 104 kann bevorzugt an einem Ende der Kunststoffprofilleiste 101 überstehen, wobei dieser überstehende Abschnitt deutlich außerhalb der technischen Toleranzgrenzen des Herstellungsverfahrens liegt, mindestens derart, dass der überstehende Abschnitt als Griffstück fungiert, mittels dessen die Kunststoffschutzleiste 104 aus der Rastausnehmung der Kunststoffprofilleiste 101 vorzugsweise manuell herauslösbar ist.

In einer zweckmäßigen Weiterbildung dieser Ausführungsform (nicht gezeigt in dieser Figur) erstreckt sich das zuvor genannte doppelseitige Klebeband 106 und/oder die Klebebandschutzfolie 105 einstückig und durchgehend vom Beginn des ersten Leistenabschnittes 100a bis zum Ende des zweiten Leistenabschnittes 100b. Das doppelseitige Klebeband 106 und/oder die Klebebandschutzfolie 105 überbrückt somit einstückig und durchgehend den Übergangsbereich (oder die Grenze) 110 zwischen beiden Leistenabschnitten 100a und 100b. Das doppelseitiges Klebeband 106 und/oder die Klebebandschutzfolie 105 verläuft im Bereich des zweiten Leistenabschnittes 100b zumindest abschnittsweise frei von einer Anlagefläche. Das doppelseitige Klebeband 106 und/oder die Klebebandschutzfolie 105 wird im zweiten Leistenabschnitt 100b daher zumindest abschnittsweise nicht auf einer Anlagefläche angeordnet. Das doppelseitige Klebeband 106 und/oder die Klebebandschutzfolie 105 kann bevorzugt an einem Ende der Kunststoffprofilleiste 101 überstehen, wobei dieser überstehende Abschnitt deutlich außerhalb der technischen Toleranzgrenzen des Herstellungsverfahrens liegt, mindestens derart, dass der überstehende Abschnitt als Griffstück fungiert, mittels dessen die Klebebandschutzfolie 105 vom Klebeband 106 entlang der Leistenanordnung 101 ablösbar ist. Bevorzugt ist der überstehende Abschnitt auch frei von doppelseitigem Klebeband 106 ausgeführt und umfasst zumindest abschnittsweise ausschließlich die Klebebandschutzfolie 105. In diesem Falle erstreckt sich das zuvor genannte doppelseitige Klebeband 106 einstückig und durchgehend vom Beginn des ersten Leistenabschnittes 100a bis zum Ende des ersten Leistenabschnittes 100a und die Klebebandschutzfolie 105 erstreckt sich gleichzeitig einstückig und durchgehend vom Beginn des ersten Leistenabschnittes 100a bis zum Ende des zweiten Leistenabschnittes 100b. Gezeigt ist auch eine Materialunterbrechung 108 des Kunststoffprofilleistenmaterials am Ende des ersten Leistenabschnittes 100a.

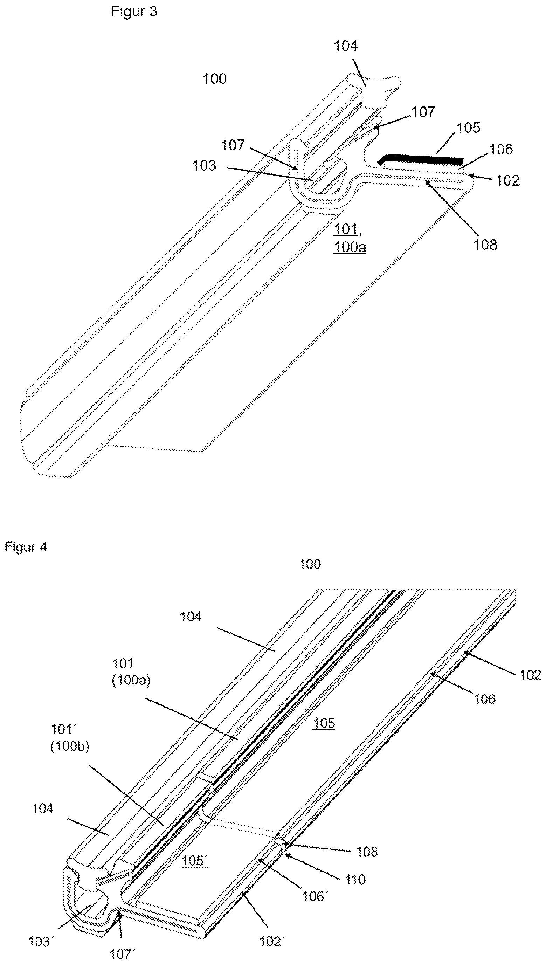

Figur 3 zeigt die überstehende Kunststoffschutzleiste 104 der aus der Figur 2 bekannten Leistenanordnung 100 perspektivisch im Detail. Leicht erkennbar ist außerdem der Leistenabschnitt 100a mit einer Kunststoffprofilleiste 101, einer Anlagefläche 102, einer Rastausnehmung 103, mit der Kunststoffschutzleiste 104, einem doppelseitigen Klebeband 106, einer Klebebandschutzfolie 105 und einem Profilleistenkern 107, vorzugsweise aus Metall. Der Profilleistenkern 107 ist vorzugsweise ergänzend vorgesehen und kann beispielsweise Aluminium umfassen, sowie mehrteilig ausgebildet sein, wie im Bild gezeigt. Die Rastausnehmung 103 ist im Querschnitt etwa U-förmig ausgebildet und umfasst zwei sich entlang der Rastausnehmung 103 zumindest abschnittsweise erstreckende und vorzugsweise gegenüberliegende Rasthaken. Die Kunststoffschutzleiste 104 ist im Querschnitt in etwa T-förmig ausgebildet und derart ausgeformt, dass die Kunststoffschutzleiste 104 zumindest abschnittsweise mit den Rasthaken formschlüssig verrastbar ist. In Figur 3 ist die Anordnung bereits verrastet gezeigt. Die gezeigte Querschnittsfläche, welche den Endabschnitt der Kunststoffprofilleiste 101 repräsentiert, kann mittels einer Sollbruchstelle 108, mittels einer Stanzung 108 oder mittels eines Materialschnitts 108 realisiert sein.

Figur 4 zeigt den aus Figur 1 bekannten Strangabschnitt 100c als Zwischenprodukt, welcher erfindungsgemäß vorbehandelt wurde, so dass eine Leistenanordnung 100 mit einem ersten und mit einem zweiten Leistenabschnitt 100a, 100b entsteht. In der hier gezeigten bevorzugten Ausführungsform ist eine (erste) Kunststoffprofilleiste 101 mit einer von ihr umfassten Rastausnehmung 103 (im Bild nicht sichtbar) und einer Anlagefläche 102 (größtenteils verdeckt von dem doppelseitigen Klebeband 106 mit Klebebandschutzfolie 105) gezeigt. Die erste Kunststoffprofilleiste 101 erstreckt sich ausschließlich und im Rahmen der herstellungsspezifischen Toleranzgrenzen innerhalb des ersten Leistenabschnittes 100a. Die vorzugsweise gleichermaßen ausgebildete zweite Kunststoffprofilleiste 101' mit einer von ihr umfassten Rastausnehmung 103' und einer Anlagefläche 102' (größtenteils verdeckt von dem doppelseitigen Klebeband 106' mit Klebebandschutzfolie 105), erstreckt sich ausschließlich und im Rahmen der herstellungsspezifischen Toleranzgrenzen innerhalb des zweiten Leistenabschnittes 100b. Das Klebeband 106, 106' mit der Klebebandschutzfolie 105 erstreckt sich vorzugsweise durchgehend und einstückig innerhalb beider Leistenabschnitte 100a, 100b entlang und über beide Kunststoffprofilleisten 101, 101' und ist zumindest abschnittsweise mit den Anlageflächen 102, 102' beider Kunststoffprofilleisten 101, 101' verklebt.

Die Kunststoffschutzleiste 104 erstreckt sich einstückig und durchgehend innerhalb beider Leistenabschnitte 100a, 100b entlang und über beide Kunststoffprofilleisten 101, 101' und ist zumindest abschnittsweise mit den Rastausnehmungen 103, 103' beider Kunststoffprofilleisten 101, 101' formschlüssig und/oder kraftschlüssig und lösbar verrastet.

In der hier gezeigten bevorzugten Ausführungsform erstreckt sich die erste Kunststoffprofilleiste 101 einstückig und durchgehend vom Beginn bis zum Ende des ersten Leistenabschnittes 100a. Die zweite Kunststoffprofilleiste 101' erstreckt sich dabei bevorzugt einstückig und durchgehend vom Beginn bis zum Ende des zweiten Leistenabschnittes 100b. Die Kunststoffschutzleiste 104 erstreckt sich dabei, bevorzugt einstückig und durchgehend, vom Beginn des ersten Leistenabschnittes 100a bis zum Ende des zweiten Leistenabschnittes 100b. Die Kunststoffschutzleiste 104 überbrückt in allen Ausführungsformen einstückig und durchgehend den Übergangsbereich 110, innerhalb dessen beide Leistenabschnitte 100a und 100b aneinander angrenzen.

Die Kunststoffschutzleiste 104 verläuft in der hier gezeigten bevorzugten Ausführungsform im Bereich des zweiten Leistenabschnittes 100b, im Gegensatz zu der aus Figur 2 bekannten Anordnung, jedoch nicht mehr frei. Die Kunststoffschutzleiste 104 ist zumindest abschnittsweise von der Rastausnehmung 103' der zweiten Kunststoffprofilleiste 101' umgeben. Diese aus Sicht des Leistenabschnittes 100a deutlich außerhalb der technischen Toleranzgrenzen des Herstellungsverfahrens liegende überstehende Anordnung, umfassend die zweite Kunststoffprofilleiste 101' mit Rastausnehmung 103' und die Kunststoffschutzleiste 104, fungiert nun als Griffstück, mittels dessen die Kunststoffschutzleiste 104 entlang der Rastausnehmung 103 der Kunststoffprofilleiste 101 leicht manuell herauslösbar ist.

In einer zweckmäßigen Weiterbildung dieser Ausführungsform erstreckt sich das zuvor genannte doppelseitige Klebeband 106 und/oder die Klebebandschutzfolie 105 einstückig und durchgehend vom Beginn des ersten Leistenabschnittes 100a bis zum Ende des zweiten Leistenabschnittes 100b. Das doppelseitige Klebeband 106, 106' und/oder die Klebebandschutzfolie 105 überbrückt somit einstückig und durchgehend den Übergang 110 zwischen beiden Leistenabschnitten 100a und 100b. Das doppelseitiges Klebeband 106, 106' und/oder die Klebebandschutzfolie 105 überbrückt somit einstückig und durchgehend die Grenze zwischen beiden Leistenabschnitten 100a und 100b. Das doppelseitige Klebeband 106' und/oder die Klebebandschutzfolie 105 verläuft im Bereich des zweiten Leistenabschnittes 100b im Gegensatz zu der bzgl. Figur 2 erwähnten zweckmäßigen Weiterbildung der dort gezeigten Anordnung nicht mehr frei. Das doppelseitige Klebeband 106' ist daher zumindest abschnittsweise auf der Anlagefläche 102' der Kunststoffprofilleiste 101' aufgeklebt. Diese aus Sicht des Leistenabschnittes 100a deutlich außerhalb der technischen Toleranzgrenzen des Herstellungsverfahrens liegende überstehende Anordnung, umfassend die zweite Kunststoffprofilleiste 101' mit Rastausnehmung 103' und die Kunststoffschutzleiste 104 und das doppelseitige Klebeband 106' mit Klebebandschutzfolie 105, fungiert nun als Griffstück, mittels dessen die Kunststoffschutzleiste 104 und/oder die Klebebandschutzfolie 105 entlang der Rastausnehmung 103 bzw. der Anlagefläche 102 der Kunststoffprofilleiste 101 leicht manuell ablösbar ist. Das doppelseitige Klebeband 106, 106' ist bevorzugt im Übergangsbereich 110 zwischen den beiden Leistenabschnitten 100a, 100b durchtrennt, so dass lediglich die Klebebandschutzfolie 105 einstückig verbleibt und zwei Klebebandabschnitte an den Übergangsbereich 110 angrenzen. Der Übergangsbereich 110 kann mittels einer Sollbruchstelle 108, einer Stanzung 108 oder eines Materialschnitts 108 realisiert sein. Ein Profilleistenkern 107, 107' kann beidseitig und angrenzend an den Übergangsbereich 110 vorzugsweise vorgesehen sein und beispielsweise Aluminium umfassen, sowie mehrteilig ausgebildet sein und/oder an unterschiedlichen Positionen am Querschnitt vorgesehen sein.

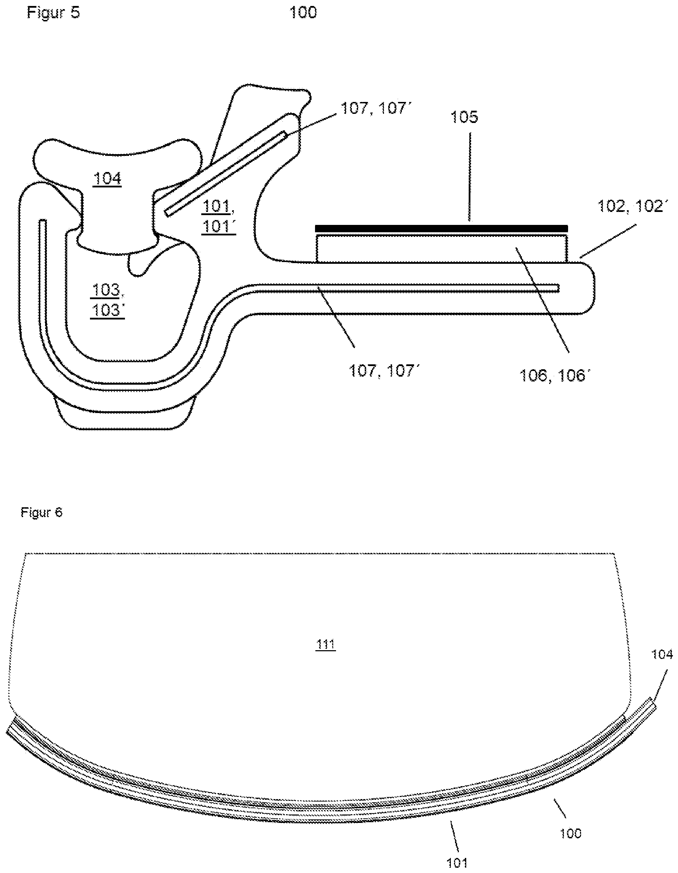

Figur 5 zeigt die Leistenanordnung 100 im Querschnitt. Dieser Querschnitt beschreibt den Querschnitt des Leistenabschnittes 100a der in der Figur 2 gezeigten Leistenanordnung 100 und die Querschnitte der Leistenabschnitte 100a und 100b der in der Figur 4 gezeigten Leistenanordnung 100.

Im Detail zu sehen sind die einstückige Kunststoffschutzleiste 104, die Kunststoffprofilleiste 101, 101', ein freier Teilabschnitt der Anlagefläche 102, 102', die Rastausnehmung 103, 103', das doppelseitige Klebeband 106, 106', die Klebebandschutzfolie 105 und ein Profilleistenkern 107, 107'. Der Profilleistenkern 107, 107' ist vorzugsweise vorgesehen und kann beispielsweise Aluminium umfassen und außerdem mehrteilig ausgebildet sein, wie im Bild gezeigt. Die Rastausnehmung 103, 103' ist im Querschnitt etwa U-förmig ausgebildet und umfasst zwei sich entlang der Rastausnehmung 103, 103' zumindest abschnittsweise erstreckende und vorzugsweise gegenüberliegende Rasthaken. Die Kunststoffschutzleiste 104 ist im Querschnitt etwa T-förmig ausgebildet und derart ausgeformt, dass die Kunststoffschutzleiste 104 zumindest abschnittsweise mit den Rasthaken formschlüssig verrastbar ist. In Figur 5 ist der verrastete Zustand dargestellt.

Figur 6 zeigt eine Windschutzscheibe mit einer erfindungsgemäßen Leistenanordnung 100 wie in Figur 2 gezeigt. Alternativ kommen alle beschriebenen und/oder beanspruchten Ausführungsformen von Leistenanordnungen 100 in Betracht. Die erfindungsgemäße Leistenanordnung 100 ist bei dieser Ausführungsform entlang der unteren Kante der Windschutzscheibe mittels des doppelseitigen Klebebandes 106 (verdeckt durch die Windschutzscheibenkante) bereits angeklebt. Die Kunststoffschutzleiste 104 steht hier im Bild rechtsseitig als Griffmittel zum Abziehen der Kunststoffschutzleiste 104 über. Alternativ könnte die Kunststoffschutzleiste 104 auch linksseitig als Griffmittel zum Abziehen der Kunststoffschutzleiste 104 überstehen. Weiter alternativ könnte die Kunststoffschutzleiste 104 auch beidseitig als Griffmittel zum Abziehen der Kunststoffschutzleiste 104 überstehen.

Zur Montage einer Wasserkastenabdeckung (nicht gezeigt) wird zunächst die Windschutzscheibe 111 mit der erfindungsgemäßen Leistenanordnung 100 an einer Karosserieöffnung (nicht gezeigt) angebracht, z.B. an einem Scheibenflansch der A-Säule eines KFZ. Anschließend wird die Kunststoffschutzleiste 104 erfindungsgemäß aus der Rastausnehmung 103 der Kunststoffprofilleiste 101 (im Bild verdeckt durch die Kunststoffschutzleiste 104) entfernt, bevor die Befestigungsrippe der Wasserkastenabdeckung mit der Rastausnehmung 103 verrastet wird.

Für das Ersatzteilgeschäft kann auch ein Montagebausatz (nicht gezeigt) bereitgestellt werden, umfassend zumindest eine Windschutzscheibe 111 und eine noch nicht montierte erfindungsgemäße Leistenanordnung 100.

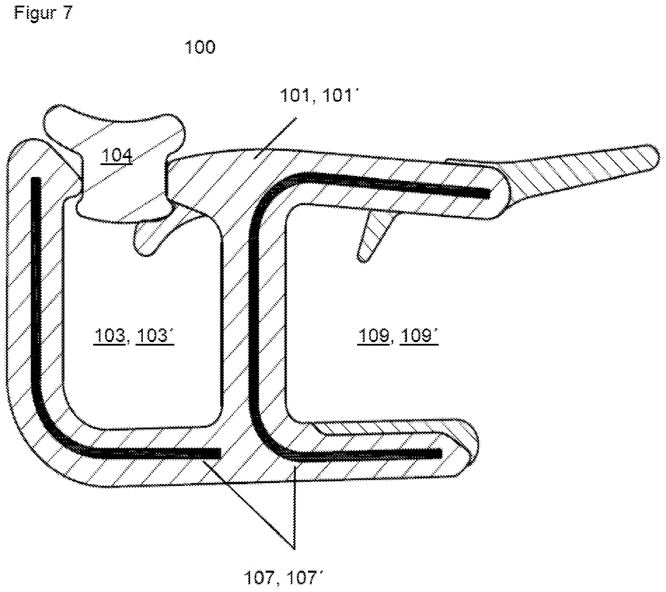

Figur 7 zeigt eine alternative Ausführungsform eines Querschnittes für die Leistenanordnung 100. Dieser Querschnitt beschreibt den Querschnitt des Leistenabschnittes 100a der in der Figur 2 gezeigten Leistenanordnung 100 und die Querschnitte der Leistenabschnitte 100a und 100b der in Figur 4 gezeigten Leistenanordnung 100 sowie einen bevorzugten Querschnitt des in Figur 1 gezeigten Strangabschnittes 100c.

Neben einer etwa U-förmigen Rastausnehmung 103, 103', vorzugsweise mit beidseitigem Hinterschnitt, ist bei dieser Ausführungsform auch eine etwa U-förmige scheibenseitige Montagenut 109, 109', vorzugsweise ohne Hinterschnitt, vorgesehen, welche entlang der Scheibenkante anordenbar ist und welche die Scheibenkante beidseitig umfasst. Die scheibenseitige Öffnung der Montagenut 109, 109' verläuft in etwa rechtwinkelig zur wasserkastenseitigen Öffnung der Rastausnehmung 103, 103'. Eine Anlagefläche mit doppelseitigem Klebeband zum Ankleben der Anordnung entlang der Windschutzscheibenkante kann hier entfallen bzw. wird durch die Montagenut 109, 109' ersetzt. Abgesehen davon sind alle sonstigen erfindungsgemäßen Merkmale auch hier realisiert und mit identischen Bezugszeichen gekennzeichnet. Im Übrigen wird Bezug auf die Beschreibung genommen.

Bei allen oben beschriebenen und/oder gezeigten Ausführungsformen kann die Kunststoffprofilleiste 101, 101' aus unterschiedlichen Materialien hergestellt sein. Insbesondere sich entlang einer Karosserieöffnung und/oder einer Fahrzeugscheibe erstreckende Abschnitte sind, zumindest abschnittsweise- und/oder bereichsweise, bevorzugt mittels eines Kunststoffes mit geringerer Shorehärte im Vergleich zur Shorehärte der Kunststoffprofilleiste 101, 101' und/oder im Vergleich zur Shorehärte der Rastausnehmung 103, 103' realisiert. Die gezeigten Ausführungsformen können bevorzugt mittels eines Koextrusionsverfahrens hergestellt werden. Alternativ wäre auch ein 3D-Druckverfahren denkbar oder eine gleichzeitige Verwendung beider Herstellverfahren. Weitere Verfahren, welche bevorzugt eine einstückige Herstellung der Leistenanordnungskomponenten als Endlosstrang ermöglichen, sind ebenfalls anwendbar und zu empfehlen.

### Liste der Bezugszeichen

**[Tabellen 1]**

| | |
|---|---|
| 100 | Leistenanordnung |
| 100 a | erster Leistenabschnitt |
| 100 b | zweiter Leistenabschnitt |
| 100 c | Strangabschnitt |
| 100 d | Profilleistenstrang |
| 101 | (erste) Kunststoffprofilleiste |
| 101' | zweite Kunststoffprofilleiste; endständiger Teilabschnitt |
| 102, 102' | Anlagefläche |
| 103, 103' | Rastausnehmung |
| 104 | Kunststoffschutzleiste |
| 104a | Schutzleistenstrang |
| 105 | Klebebandschutzfolie |
| 106, 106' | Klebeband |
| 107, 107' | Profilleistenkern |
| 108 | Sollbruchstelle, Stanzung, Schnitt |
| 109, 109' | Montagenut |
| 110 | Grenze/Übergangsbereich (zwischen den Leistenabschnitten 100a und 100b), Bearbeitungsbereich |
| 111 | Windschutzscheibe |

## Patentansprüche

1. Leistenanordnung (100), mit
einer Kunststoffprofilleiste (101), welche eine Rastausnehmung (103) zur Aufnahme einer Befestigungsrippe einer Wasserkastenabdeckung umfasst, und mit einer einstückigen Kunststoffschutzleiste (104), welche mit der Rastausnehmung (103) mechanisch lösbar verrastbar ist,
**dadurch gekennzeichnet, dass**
ein erster und ein zweiter Leistenabschnitt (100a, 100b) vorgesehen ist und die Kunststoffprofilleiste (101) derart ausgebildet ist, dass sich diese ausschließlich innerhalb des ersten Leistenabschnittes (100a) einstückig und durchgehend vom Beginn bis zum Ende des ersten Leistenabschnittes (100a) erstreckt, und dass die Kunststoffschutzleiste (104) derart ausgebildet ist, dass sich diese innerhalb beider Leistenabschnitte (100a, 100b) einstückig und durchgehend vom Beginn des ersten Leistenabschnittes (100a) bis zum Ende des zweiten Leistenabschnittes (100b) erstreckt und entlang der Kunststoffprofilleiste (101) zumindest abschnittsweise mit der Rastausnehmung (103) verrastet ist.

2. Leistenanordnung (100) nach Anspruch 1, **dadurch gekennzeichnet, dass** eine zweite Kunststoffprofilleiste (101') mit einer Rastausnehmung (103') derart vorgesehen ist, dass sich diese ausschließlich innerhalb des zweiten Leistenabschnittes (100b) erstreckt und wobei die Kunststoffschutzleiste (104) zusätzlich mit der Rastausnehmung (103') der zweiten Kunststoffprofilleiste (101') zumindest abschnittsweise verrastet ist.

3. Leistenanordnung (100) nach einem der vorhergehenden Ansprüche, **dadurch gekennzeichnet, dass** die Kunststoffprofilleiste (101,101') eine Anlagefläche (102,102') zum Anlegen entlang einer Windschutzscheibenkante umfasst, und wobei ein doppelseitiges Klebeband (106, 106') vorgesehen ist, umfassend eine erste Klebefläche und eine mittels einer Klebebandschutzfolie (105) bedeckte zweite Klebefläche, wobei das Klebeband (106, 106') mittels der ersten Klebefläche auf der Anlagefläche (102, 102') aufgeklebt ist und wobei sich die Klebebandschutzfolie (105) innerhalb beider Leistenabschnitte (100a, 100b) erstreckt.

4. Leistenanordnung (100) nach einem der vorhergehenden Ansprüche, **dadurch gekennzeichnet, dass** ein Ende der Kunststoffprofilleiste (101) im Wesentlichen quer zur Längserstreckung der Kunststoffprofilleiste (101) eine Sollbruchstelle (108) oder eine gestanzte Schnittstelle (108) aufweist.

5. Leistenanordnung (100) nach einem der vorhergehenden Ansprüche, **dadurch gekennzeichnet, dass** die Kunststoffprofilleiste (101, 101') einen sich entlang der Kunststoffprofilleiste (101, 101') erstreckenden und plastisch verformten Profilleistenkern (107, 107') umfasst, wobei die Kunststoffprofilleiste (101, 101') bevorzugt entlang ihrer Längserstreckung zumindest abschnittsweise bogenförmig ausgebildet ist.

6. Windschutzscheibe (111) mit einer Leistenanordnung (100) nach einem der vorhergehenden Ansprüche.

7. Fahrzeug mit einer Windschutzscheibe (111) nach Anspruch 6.

8. Verfahren zur Herstellung einer Leistenanordnung (100), umfassend Bereitstellung eines Profilleistenstrangs (100d) mit einer Rastausnehmung (103) zur Aufnahme einer Befestigungsrippe einer Wasserkastenabdeckung sowie eines Schutzleistenstrangs (104a), welcher zumindest abschnittsweise mit der Rastausnehmung (103) mechanisch lösbar verrastet ist, **gekennzeichnet durch** Zweiteilung des Profilleistenstrangs (100d) in einem Bearbeitungsbereich (110), wobei der Schutzleistenstrang (104a) einstückig bleibt.

9. Verfahren nach Anspruch 8, **dadurch gekennzeichnet, dass** vor oder nach der Zweiteilung ein Strangabschnitt (100, 100c, 104) vom Profilleistenstrang (100d) und vom Schutzleistenstrang (104a) abgetrennt wird, welcher den Bearbeitungsbereich (110) umfasst.

10. Verfahren nach einem der vorhergehenden Verfahrensansprüche, **dadurch gekennzeichnet, dass** im Bearbeitungsbereich (110) eine Sollbruchstelle (108) vorgesehen wird.

11. Verfahren nach einem der vorhergehenden Verfahrensansprüche, **dadurch gekennzeichnet, dass** im Bearbeitungsbereich (110) eine Materialdurchtrennung (108) vorgesehen wird.

12. Verfahren nach Anspruch 11, **dadurch gekennzeichnet, dass** die Materialdurchtrennung (108) mittels eines Profilstanzmessers vorgenommen wird.

13. Verfahren nach einem der vorhergehenden Verfahrensansprüche, **dadurch gekennzeichnet, dass** im Zuge der Zweiteilung ein endständiger Teilabschnitt (101') von dem Profilleistenstrang (100d) abgeteilt und optional entfernt wird.

14. Verfahren nach einem der vorhergehenden Verfahrensansprüche, **dadurch gekennzeichnet, dass** der Profilleistenstrang (100d) eine Anlagefläche (102,102') zum Anlegen entlang einer Windschutzscheibenkante umfasst, wobei ein doppelseitiges Klebeband (106, 106') vorgesehen ist, umfassend eine erste Klebefläche und eine mittels einer Klebebandschutzfolie (105) bedeckte zweite Klebefläche, wobei das Klebeband (106, 106') mittels der ersten Klebefläche noch vor der Zweiteilung auf der Anlagefläche (102, 102') aufgeklebt wird, und wobei das Klebeband (106, 106') während der Zweiteilung derart durchtrennt wird, dass die Klebebandschutzfolie (105) einstückig verbleibt.

15. Verfahren zur Montage einer Wasserkastenabdeckung an einer Windschutzscheibe (111) nach Anspruch 6, **dadurch gekennzeichnet, dass** der sich innerhalb des zweiten Leistenabschnittes (100b) erstreckende Abschnitt der Kunststoffschutzleiste (104) als Greifmittel verwendet wird und die Kunststoffschutzleiste (104) mittels dieses Greifmittels aus der Rastausnehmung (103) entfernt wird, bevor die Befestigungsrippe der Wasserkastenabdeckung mit der Rastausnehmung (103) verrastet wird.

16. Verwendung einer Leistenanordnung (100) nach Anspruch 1 zur Anbringung an einer Windschutzscheibe.

## Claims

1. A strip assembly (100) having:
a profiled plastic strip (101) including a latching recess (103) for receiving a mounting rib of an air inlet panel, and further having a single-piece protective plastic strip (104) which is mechanically releasably latchable in the latching recess (103),
**characterized in that**
a first and a second strip section (100a, 100b) are provided, and the profiled plastic strip (101) is configured such that it extends only within the first strip section (100a) in one piece and continuously from the beginning to the end of first strip section (100a), and that the protective plastic strip (104) is configured such that it extends within both strip sections (100a, 100b) in one piece and continuously from the beginning of first strip section (100a) to the end of second strip section (100b) and is latched in the latching recess (103) at least in some sections along the profiled plastic strip (101).

2. The strip assembly (100) according to claim 1, **characterized in that** a second profiled plastic strip (101') having a latching recess (103') is provided such that it extends only within the second strip section (100b), and wherein the protective plastic strip (104) is also latched in the latching recess (103') of the second profiled plastic strip (101') at least in some sections.

3. The strip assembly (100) according to any of the preceding claims, **characterized in that** the profiled plastic strip (101, 101') includes an engagement surface (102, 102') for engagement along an edge of a windshield, and wherein a double-sided adhesive tape (106, 106') is provided including a first adhesive surface and a second adhesive surface that is covered by a protective film (105) of the adhesive tape, the adhesive tape (106, 106') being bonded to the engagement surface (102, 102') by the first adhesive surface, and the adhesive tape's protective film (105) extending within both strip sections (100a, 100b).

4. The strip assembly (100) according to any of the preceding claims, **characterized in that** one end of the profiled plastic strip (101) has a predetermined fracture line (108) or a punch-cut line (108) substantially transverse to the longitudinal extent of the profiled plastic strip (101).

5. The strip assembly (100) according to any of the preceding claims, **characterized in that** the profiled plastic strip (101, 101') includes a core (107, 107') which extends along the profiled plastic strip (101, 101') and is plastically deformable, the profiled plastic strip (101, 101') preferably being arcuately curved along its longitudinal extent at least in some sections.

6. A windshield (111) having a strip assembly (100) according to any of the preceding claims.

7. A vehicle having a windshield (111) according to claim 6.

8. A method for producing a strip assembly (100), comprising:
providing a profiled strip strand (100d) having a latching recess (103) for receiving a mounting rib of an air inlet panel as well as a protective strip strand (104a) which is mechanically releasably latched in the latching recess (103) at least in some sections, **characterized in** dividing the profiled strip strand (100d) into two sections in a processing region (110), the protective strip strand (104a) remaining in one piece.

9. The method according to claim 8, **characterized in that** prior to or subsequent to division into two sections, a strand section (100, 100c, 104) including the processing region (110) is severed from the profiled strip strand (100d) and from the protective strip strand (104a).

10. The method according to any of the preceding method claims, **characterized in that** a predetermined fracture line (108) is provided in the processing region (110).

11. The method according to any of the preceding method claims, **characterized in that** a cut through the material (108) is provided in the processing region (110).

12. The method as recited in claim 11, **characterized in that** the cut through the material (108) is made by a profiled punching knife.

13. The method according to any of the preceding method claims, **characterized in that** during division into two sections, an end section (101') is separated from the profiled strip strand (100d) and optionally removed.

14. The method according to any of the preceding method claims, **characterized in that** the profiled strip strand (100d) includes an engagement surface (102, 102') for engagement along an edge of a windshield, wherein a double-sided adhesive tape (106, 106') is provided including a first adhesive surface and a second adhesive surface that is covered by a protective film (105) of the adhesive tape, the adhesive tape (106, 106') being bonded to the engagement surface (102, 102') by the first adhesive surface prior to division into two sections, and, during division into two sections, the adhesive tape (106, 106') being cut through in such a way that the adhesive tape's protective film (105) remains in one piece.

15. A method for mounting an air inlet panel to a windshield (111) according to claim 6, **characterized in that** the section of the protective plastic strip (104) that extends within the second strip section (100b) is used as a grasping means, and the protective plastic strip (104) is removed from the latching recess (103) using this grasping means before the mounting rib of the air inlet panel is latched into latching recess 103.

16. Use of a strip assembly (100) according to claim 1 for attachment to a windshield.

## Revendications

1. Ensemble de bandes (100), comprenant une bande profilée (101) en matière synthétique qui comprend un évidement d'encliquetage (103) destiné à recevoir une nervure de fixation d'un couvercle de réservoir d'eau, et une bande de protection (104) en matière synthétique d'une seule pièce qui peut être encliquetée mécaniquement de manière amovible avec l'évidement d'encliquetage (103),
**caractérisé en ce que**
une première et une deuxième portion de bande (100a, 100b) sont prévues et la bande profilée (101) en matière synthétique est conçue de manière à s'étendre d'une seule pièce et de manière continue exclusivement à l'intérieur de la première portion de bande (100a) du début à la fin de la première portion de bande (100a), et la bande de protection (104) en matière synthétique est conçue de manière s'étendre d'une seule pièce et de manière continue à l'intérieur des deux portions de bande (100a, 100b) du début de la première portion de bande (100a) jusqu'à la fin de la deuxième portion de bande (100b) et de manière à s'encliqueter avec l'évidement d'encliquetage (103) le long de la bande profilée (101) en matière synthétique au moins par portions.

2. Ensemble de bandes (100) selon la revendication 1, **caractérisé en ce qu'**une deuxième bande profilée (101') en matière synthétique est prévue avec un évidement d'encliquetage (103') de manière à s'étendre exclusivement à l'intérieur de la deuxième portion de bande (100b) et la bande de protection (104) en matière synthétique étant en outre encliquetée au moins par portions avec l'évidement d'encliquetage (103') de la deuxième bande profilée (101') en matière synthétique.

3. Ensemble de bandes (100) selon l'une des revendications précédentes, **caractérisé en ce que** la bande profilée (101, 101') en matière synthétique comprend une surface d'appui (102, 102') destinée à être placée le long d'un bord de pare-brise, et une bande adhésive double face (106, 106') étant prévue qui comprend une première surface adhésive et une deuxième surface adhésive recouverte d'un film de protection de bande adhésive (105), la bande adhésive (106, 106') étant collée à la surface d'appui (102, 102') au moyen de la première surface adhésive, et le film de protection de bande adhésive (105) s'étendant à l'intérieur des deux portions de bande (100a, 100b).

4. Ensemble de bandes (100) selon l'une des revendications précédentes, **caractérisé en ce qu'**une extrémité de la bande profilée (101) en matière synthétique comporte un point de rupture (108) ou une interface perforée (108) sensiblement transversalement à l'extension longitudinale de la bande profilée (101) en matière synthétique.

5. Ensemble de bandes (100) selon l'une des revendications précédentes, **caractérisé en ce que** la bande profilée (101, 101') en matière synthétique comprend un noyau de bande profilée (107, 107') déformé plastiquement et s'étendant le long de la bande profilée (101, 101') en matière synthétique, la bande profilée (101, 101') en matière synthétique étant de préférence conçue en forme d'arc, au moins en portions, le long de son extension longitudinale.

6. Pare-brise (111) comprenant un ensemble de bandes (100) selon l'une des revendications précédentes.

7. Véhicule comportant un pare-brise (111) selon la revendication 6.

8. Procédé de fabrication d'un ensemble de bandes (100), ledit procédé comprenant les étapes suivantes :
fournir un tronçon de bande profilée (100d) pourvu d'un évidement d'encliquetage (103) destiné à recevoir une nervure de fixation d'un couvercle de réservoir d'eau et un tronçon de bande de protection (104a) qui est encliqueté mécaniquement de manière amovible avec l'évidement d'encliquetage (103) au moins par portions,
**caractérisé par** l'étape suivante
diviser en deux le tronçon de bande profilée (100d) dans une zone de traitement (110), le tronçon de bande de protection (104a) restant d'une seule pièce.

9. Procédé selon la revendication 8, **caractérisé en ce que**, avant ou après la division en deux, une portion de tronçon (100, 100c, 104), qui comprend la zone de traitement (110), est séparée du tronçon de bande profilée (100d) et du tronçon de bande de protection (104a) .

10. Procédé selon l'une des revendications de procédé précédentes, **caractérisé en ce qu'**un point de rupture (108) est prévu dans la zone de traitement (110).

11. Procédé selon l'une des revendications de procédé précédentes, **caractérisé en ce qu'**un sectionnement de matière (108) est prévu dans la zone de traitement (110) .

12. Procédé selon la revendication 11, **caractérisé en ce que** le sectionnement de matière (108) est réalisé au moyen d'un couteau de découpage profilé.

13. Procédé selon l'une des revendications de procédé précédentes, **caractérisé en ce que**, au cours de la division en deux, une portion terminale (101') est détachée du tronçon de bande profilée (100d) et éventuellement supprimée.

14. Procédé selon l'une des revendications de procédé précédentes, **caractérisé en ce que** le tronçon de bande profilée (100d) comprend une surface d'appui (102, 102') destinée à être placée le long d'un bord de pare-brise, une bande adhésive double face (106, 106') étant prévue qui comprend une première surface adhésive et une deuxième surface adhésive recouverte d'un film de protection de bande adhésive (105), la bande adhésive (106, 106') étant collée à la surface d'appui (102, 102') au moyen de la première surface adhésive encore avant la division en deux, et la bande adhésive (106, 106') étant sectionnée lors de la division en deux de telle sorte que le film de protection de bande adhésive (105) reste d'une seule pièce.

15. Procédé de montage d'un couvercle de réservoir d'eau sur un pare-brise (111) selon la revendication 6, **caractérisé en ce que** la portion de la bande de protection (104) en matière synthétique, laquelle portion s'étend à l'intérieur de la deuxième portion de bande (100b), est utilisée comme moyen de préhension et la bande de protection (104) en matière synthétique est retirée de l'évidement d'encliquetage (103) à l'aide de ce moyen de préhension avant que la nervure de fixation du couvercle de réservoir d'eau ne soit encliquetée avec l'évidement d'encliquetage (103).

16. Utilisation d'un ensemble de bandes (100) selon la revendication 1 pour la fixation d'un pare-brise.
